# EUROPEAN PATENT APPLICATION

(11) **EP 1 270 653 A2**
(43) Date of publication of application: **02.01.2003**
(21) Application number: 02013154.6
(22) Date of filing: 14.06.2002
(51) Int. Cl.: C08J 9/36

(54) **Coated polymeric foam**

(30) Priority: 28.06.2001 US 897163
(71) Applicant: Armacell Enterprise GmbH, 48153 Münster (DE)
(72) Inventor: Davis, Stephen C., Chapel Hill, NC 27516 (US); Sanduija, Mohan L., Flushing, NY 11355 (US); Horowitz, Carl, Brooklyn, NY 11234 (US); Zilbert, Izabella, New York, NY 11214 (US); Thottathill, Paul, New Hyde Park, NY 11040 (US)
(74) Representative: Finck, Dieter, Dr.Ing.

(57) **Abstract**

Disclosed is both a method and composition for providing a coated low density foam. The coated low density foam includes a low density foam substrate coated with mixture comprising a prepolymer, a monomer, a catalyst and a graft initiator. The coating is grafted onto a low density foam substrate to provide the low density foam substrate protection from abrasions, tears, scratches, ozone and UV light, while maintaining the flexibility of the foam substrate.

## Description

### FIELD OF THE INVENTION

The present invention relates generally to coated foams and in particular to a chemically grafted coated foam.

### BACKGROUND

Low density foams are often used in the building industry. Such foams are relatively inexpensive, have good insulating properties and are typically formed from closed cell elastomeric or plastic foams. Such foams are very flexible and work well as an insulating product.

Typically, reducing the density of a foam product increases both the economics and thermal properties of the product. Unfortunately, with reduced density there is an increased susceptibility to wear on the foam product. Resulting density reduction means a more fragile foam product. For example, in tubular foam insulation tears often occur in the product as it is often dragged around a construction site.

A further concern is environmental exposure of specific types of foam insulation such as PVC/NBR. Outdoors, UV light is known to degrade foam insulation. Flexible foam insulation is typically painted when used outdoors or just allowed to degrade. A painted finish provides adequate protection against UV. The paint imparts additional stiffness and is applied after installation is complete. For extreme protection, a coating system comprising of fiberglass mesh and mastic can be applied to the insulation. Armacek system is an example of this protective coating system. Heavy sheets of fabric or rubber may also be used to protect flexible insulation. These solutions greatly reduce the original flexibility and are typically applied after installation is completed.

Another practice to protect insulation from exposure and mechanical abuse is the use of cladding which can be PVC or metal foil. Both solutions also lack flexibility.

A rubber, plastic or high density foam layer may be applied during production using a co-extrusion process. However, such a process has undesirably high equipment costs and in the case of plastic coating, flexibility is compromised due to thickness limitations.

Thus, it is desirable to have a low density foam insulation product which has the benefits of very low densities and yet maintains or has improved surface toughness without sacrificing flexibility. In addition, it is desired to have a low cost foam which requires no additional treatment by the user to protect against UV or ozone exposure.

### SUMMARY

The present invention includes a coated low density foam. The low density foam is coated with a coating comprising a prepolymer, a monomer, a catalyst and a graft initiator. The coating is grafted onto a low density foam substrate. Grafting is the covalent linkage of a first polymer to a second polymer. In this case the monomer is linked to the low density foam substrate. The grafted coating may protect the low density foam substrate from abrasions, tears, scratches, ozone and UV light while maintaining the flexibility of the foam substrate.

The prepolymer typically imparts the properties of tear and scratch resistance to the foam substrate. In one embodiment the prepolymer is a water soluble urethane and is attached to the monomer as a functional group. The monomer may be a urethane acrylate.

The catalyst is typically a free radical initiator such as a peroxide. The catalyst often aids in both vinyl polymerization and grafting reactions. The graft initiator is typically derived from either iron or silver.

in one embodiment the coated low density foam comprises both UV blockers and a flexidizing agent such as a latex. Additionally, a pigment may be added, along with adhesion and lubricity agents. Furthermore, the low density foam substrate typically has a density of up to about 10 lbs/ft.³

Additionally, a process is provided for manufacturing a coated low density foam. The process comprises mixing together a prepolymer, a monomer, a catalyst, a graft initiator and water to form a coating. The coating is then applied to a low density foam substrate and cured at either elevated temperatures or at ambient temperatures. The coating may be applied by either spraying, dipping, rolling or sponging the coating onto the substrate.

In a further embodiment, a coated polymeric foam coated with a coating comprising a water dispersible prepolymer, a monomer, a catalyst and a graft initiator is included. Additionally, a process is provided comprising mixing together a water dispersible prepolymer, a monomer, a catalyst, a graft initiator and water to form a coating. The coating is then applied to the polymeric foam substrate and cured at either elevated temperatures or at ambient temperatures.

### DETAILED DESCRIPTION

The present invention includes a coated low density foam. The coated low density foam comprises a coating chemically grafted to a low density foam substrate. Chemical grafting is the covalent linkage of a first polymer to a second polymer. In this case, the monomer is linked to the low density foam substrate. The grafted coating can protect the low density foam substrate from abrasions, tears, scratches, ozone and UV light with maintaining the flexibility of the foam substrate. The chemically grafted coating includes a prepolymer, a monomer, a catalyst and a graft initiator.

The low density foam substrate may be comprised of most any polymeric material. Typically, the substrate comprises a thermoplastic material or thermoplastic resin that softens and flows upon the application of pressure and heat. Thermoplastic resin foams typically have substantially closed-cell structures incorporating within the resin material a volatile organic liquid or blowing agent which vaporizes upon heating to form a gas. Alternatively, a foam can be used which is produced using a rubber/plastic blend which is chemically cross-linked and expanded using a chemical blowing agent which generates expansion gas during its decomposition. Additionally, further examples of low density foam substrates which may be used are described in greater detail in U.S. Patent No. 6,245,267, commonly assigned, and which is incorporated herein by reference in its entirety.

In greater detail, the low density foam substrate may be formed from formulations comprising any of the following: polyvinyl chloride, acrylo nitrile butadiene rubber, styrene butadione rubber, ethylene-propylene-diene rubber, polychloroprene, polyethylene, polypropylene or co-polymers of ethylene or propylene. The low density foam substrate typically has a density of up to about 10 lbs/ft.³

The prepolymer typically imparts the properties of tear and scratch resistance to the foam substrate and serves as the functional group attached to the monomer. In one embodiment the prepolymer is a water soluble-urethane and is attached to the monomer as a functional group. Example prepolymers include NeoRez® R-9649 available from NeoResins of Wilmington, MA and Cydrothan® HP 1035 available from Cytec Industries West Paterson, New Jersey. The water soluble prepolymers may be desired over solvent based prepolymer in consideration of environmental concerns given the toxicity of certain solvents.

The term "monomer" includes any suitable monomer or prepolymer. The monomers for use in the method and articles of the present invention may include vinyl, acrylic-based monomers, including those containing hydroxyl, carboxyl, allyl, or glycidyl functional groups. In one embodiment the monomer includes urethane acrylate.

The monomer may be derived from a salt, ester, amide or corresponding nitrile. Example monomers include, without limitation, hydroxyethyl methacrylate, hydroxypropyl methacrylate, dimethylaminoethyl acrylate, dimethylaminoethyl methacrylate, methyl acrylate, ethyl acrylate, butyl acrylate, methyl methacrylate, ethyl methacrylate, butyl methacrylate, glycidyl methacrylate, allyl methacrylate, trimethylolpropane triacrylate, hexanediol diacrylate, and the like. The monomers may be used by themselves or in combinations of two, three, or more monomers.

Furthermore, the monomers may include such monomers as vinylidine chloride, chloroprene, isoprene, dimethylaminomethyl acrylate, styrene, 1,3-butylene dimethacrylate, hydroxyethyl methacrylate, isoctylvinyl ether, acrylonitrile, acrylamide, N-vinyl pyridine, glycidyl methacrylate, N-vinyl caprolactam, N-vinyl pyrrolidone, N-vinyl carbazole, acrylic acid, methacrylic acid, ethyl acrylate, ethyl methacrylate, itaconic acid, isobutyl methacrylate, methyl acrylate, sodium styrene sulfonate, sodium vinyl sulfonate, bis (beta-chloroethyl) vinyl phosphate, cetyl vinyl ether, divinyl ether of ethylene glycol, divinyl ether of butane diol, vinyl toluene, vinyl acetate and octadecyl vinylether. Amines can be quaternized with benzyl chloride, ethyl iodide, methyl or ethyl sulfate. Monomeric chlorides can be quaternized with tertiary amines to give quaternary ammonium compounds. Examples of tertiary amines are n-ethyl morpholine, pyridine, cetyldimethyl pyridine and methyl methacrylate.

An example monomer includes SR 9035-Monomer available from Sartomer of Exton, Pennsylvania. The common name for this monomer is ethoxylated trimethylolpropane triacrylate or a urethane acrylate.

The catalyst is typically a free radical initiator. Such free radical initiators include peroxides. The catalyst often aids in both vinyl polymerization and grafting reactions. Examples of suitable catalysts which may be employed are ammonium persulfate, hydrogen peroxide, tert-butyl hydroperoxide, ditert-butyl peroxide, benzoyl peroxide, dicumyl peroxide, lauroyl peroxide, tert-butyl perbenzoate and peracetic acid. The catalyst is present in a catalytically effective amount sufficient to achieve the desired catalytic effect. The determination of this effective amount is well within the skill of the worker in this field. An example catalyst includes urea peroxide added typically in a solution of deionized water at about 0.1% solution.

The graft initiator is typically derived from either iron or silver. In greater detail, examples of suitable graft initiators are ferrous or ferric ions, silver oxide or particles of silver. The metal particles or ions may be formed in situ during the coating process. The silver may be introduced by way of aqueous silver nitrate solution. The ferrous ions may be introduced by way of aqueous ferrous ammonium sulfate solution. The concentration of the silver or ferrous solution can vary widely, but is generally within about 0.5% to about 5% by weight. An example graft initiator includes ferrous ammonium sulfate typically added in a solution of deionized water at about 0.1% solution.

In one embodiment the coated low density foam may comprise an UV blocker. Most any UV blocker compatible with the present coating may be used. Example UV blockers include Tinuvin® 1130 and Tinuvin® 292, available from Ciba Specialty Chemicals of Tarrytown, New Jersey

A flexor or flexidizing agent may also be included in the coating, such as a latex or any other compound capable of imparting some measure of flexibility to the coating. An example latex includes Neoprene Latex 115 which is a polychloroprene available from DuPont Dow of Wilmington, Delaware.

Furthermore, the coating may comprise other agents which can impart various desirable characteristics to the coating. For example, a flatting agent may be added to adjust the sheen of the coating formulation. Additionally, a pigment may be added along with adhesion promoters and lubricity agents. A co-solvent may also be added for film forming.

Additionally, a process is provided for manufacturing a coated low density foam. The process comprises mixing together a prepolymer, a monomer, a catalyst, a graft initiator and water to form a coating. The coating is then applied to a low density foam substrate and cured at either elevated temperatures or at ambient temperatures. The coating may be applied by either spraying, dipping, rolling or sponging the coating onto the substrate. Additionally, a coated polymeric foam may be made using a water dispersible prepolymer.

Having generally described the invention, a further understanding can be obtained by reference to certain specific examples which are provided herein for purposes of illustration only and are not intended to be limiting unless otherwise specified.

### Examples

In the following examples, three coatings were prepared, including the agents below, in the quantities set forth in each of the three tables below. In the prepaation of the coating, a precalculated quantity of the urethane prepolymer was taken in a container and to it were added monomers, catalyst, graft initiator along with other ingredients of the formulation. The contents were stirred to a uniform solution. The formulation, thus prepared, was then applied onto PVC-nitrile tubings or sheets. The coated samples were subjected to cure at ambient conditions and then tested for various characteristics.

The coating formulations were applied onto PVC-nitrile tubings or sheets by spraying. The coated parts were then subjected to cure at ambient conditions for 2-3 hours. The prepared samples and the ingredients and quantities are listed below.

**Table 1**

| | |
|---|---|
| Urethane Prepolymer Cydrothane HP 1035 | 60.00 lbs |
| Urethane Prepolymer Neorez R9649 | 20.00 lbs |
| Deionized water (DIW) | 30.00 lbs |
| Neoprene Latex 115 | 20.00 lbs |
| Flattening agent Crosfield HS-5 | 5.00 lbs |
| Wetting agent Silwet 177 | 1.00 lbs |
| Wetting & Defoamer agent Byk 30 | 0.300 lbs |
| DIW | 20.00 lbs |
| Butyl Cellosolve | 6.0 lbs |
| Tinuvin 1130 | 2.00 lbs |
| Tinuvin 292 | 1.00 lbs |
| Tinted Black Dispersed Pigment WD 2350 | 2.00 lbs |
| Monomer SR 9035 | 0.10 lbs |
| Sodium Vinyl Sulfonate | 0.10 lbs |
| Sodium Metalbisulfite (0.01% in DIW) | 0.01 lbs |
| Ferrous Ammonium Sulfate (0.1% Soln. in DIW) | 0.01 lbs |
| Urea Peroxide (0.1% soln. in DIW) | 0.10 lbs |

**Table 2**

| | |
|---|---|
| Urethane Prepolymer Cydrothane HP 1035 | 60.00 lbs |
| Urethane Prepolymer Neo Res R 9649 | 20.00 lbs |
| Neoprene Latex 115 | 20.00 lbs |
| DIW | 30.00 lbs |
| Sylysia 350 | 5.00 lbs |
| Wetting Agent Silwet 177 | 1.00 lbs |
| Wetting & Defoaming Agent Byk 301 | 0.30 lbs |
| DIW | 20.00 lbs |
| Butyl Cellosolve | 6.00 lbs |
| Tinuvin 1130 | 2.00 lbs |
| Tinuvin 292 | 1.00 lbs |
| Monomer SR 9035 | 0.10 lbs |
| Monomer SR 344 | 0.10 lbs |
| Urea Peroxide (0.1% Soln.) | 0.10 lbs |
| Ferrous Ammonium Sulfate (0.1% Soln.) | 0.10 lbs |

**Table 3**

| | |
|---|---|
| Urethane Prepolymer HP 1035 | 60.00 lbs |
| Urethane Prepolymer Neo Res R 9649 | 20.00 lbs |
| Neoprene Latex 115 | 20.00 lbs |
| DIW | 30.00 lbs |
| Flattening Agent TS100 | 5.00 lbs |
| Wetting Agent Silwet 177 | 1.00 lbs |
| Wetting & Defoaming Agent Byk 301 | 0.30 lbs |
| Resamine LIMT 171 | 10.00 lbs |
| Hystretch V-43 | 10.00 lbs |
| DIW | 20.00 lbs |
| Butyl Cellosolve | 6.00 lbs |
| Tinuvin 1130 | 2.00 lbs |
| Tinuvin 292 | 1.00 lbs |
| Tinted Black Dispersed Pigment WD 2350 | 2.00 lbs |
| Monomer SR 9035 | 0.10 lbs |
| Monomer SR 344 | 0.10 lbs |
| Urea Peroxide (0.1% Soln.) | 0.10 lbs |
| Ferrous Ammonium Persulfate (0.1 Soln.) | 0.10 lbs |

### Coating Performance Results

The coating of formula shown in Table 1 was tested for strength, exposure and ozone endurance. In the tests the coating from Table 1 was applied to AF Armaflex PVC/NBR foam insulation at a thickness of 1 mil (25 microns) by spraying the coating onto a polymeric substrate. The resulting finish was smooth, glossy and showed minimal wrinkling when flexed. The foam density before and after coating remained at about 4 pounds per cubic foot.

### Surface Strength

The surface strength of the coated foamed substrate was tested using a "Force to puncture" test. In this test, a compression testing devise (such as a Zwick Z2.1/TS1S Material Testing Machine, made by Zwick GmbH & Co, August-Nagle Str.11, D89079 Ulm, Germany) was used to measure the total work required to puncture the foam surface with a flat faced cylindrical pin 1 mm having a diameter of 1 mm. A specimen (30 mm x 60 mm) was placed on a flat platform for sheet material (or curved support for tubular specimens) and the pin, attached to a mount on the test machine, was lowered at a rate of 255 mm/min until a force of 0.1 N was applied. At this point the force meter was zeroed and the rate of pin lowering was switched to 10 mm/min. The force applied and distance of pin movement were recorded until the surface broke and the force dropped. The total work from zero point to break measured in N.mm was determined. The higher the work to rupture the surface, the greater the surface strength. Results are shown in Table 4 below demonstrate that the grafted coating can more than double the strength of the foam surface.

**Table 4**

| Sample/mechanical properties | Break Nmm |
|---|---|
| | |
| **PVC/NBR foam control** | 2.7 |
| **PVC/NBR foam coated** | 7.0 |

### Exposure

QUV ACCELERATED WEATHERING (The exposure equipment is used as described in ASTM G 53 "Standard practice for operating light- and water-exposure apparatus (fluorescent UV-condensation type) for exposure of nonmetallic materials"

Test specimens (6" x 3") were prepared and then exposed for 4 days, 1 week, 2, 3 and 4 weeks intervals with the visual changes being noted. The specimens were alternately exposed to UV light alone and condensation alone in a repetitive cycle. Condensation produced by exposure of one side to a saturated mixture of air and water while the reverse side was cooled by ambient air. The test conditions were intended to simulate the deterioration caused by rain or dew and sunlight exposure. The test chamber used encloses 8 rapid start fluorescent lamps, bipin, 1220 mm, 40 watts. Lamps of UV-B type with a maxima emission at bout 313 nanometers were used. The lamps were mounted parallel on 70 mm centers. Standard conditions used in testing include 4 hours of UV exposure at 60°C and 4 hours condensation at 50°C.

Samples of AP Armaflex PVC/NBR insulation with and without coatings based on the formula given in Table 1 were tested. It was found that, after 4 weeks exposure the uncoated material displayed cracks but the coated sample showed no cracking.

### Ozone Resistance

In this example, both coated and un-coated PVC/NBR foams were tested for resistance to ozone using the procedure described below.

Samples were prepared having dimensions of about 6" x 1" x 1/2" and were conditioned by applying stress via bending around a 1" diameter loop while exposing to 73.4F/50% Relative Humidity for 72 hours. Following the conditioning, the samples were exposed to 50 pphm ozone concentration at 104° F for 72 hours. The AP Armaflex PVC/NBR foam insulation samples showed pinholes along with cracks while the coated AP Armaflex, coated with the formulation described in Table 1, showed no pinholes or cracks in any of the treated samples.

While specification embodiments are set forth as illustrated and described above, it is recognized that variations may be made with respect to the disclosed embodiments. Therefore, while the invention has been disclosed in various forms only, it will be obvious to those skilled in the art that many additions, deletions and modifications can be made without departing from the spirit and scope of this invention, and no undue limits should be imposed except as set forth in the following claims.

## Claims

1. A coated low density polymeric foam comprising:
a low density polymeric foam substrate having a coating, the coating comprising a prepolymer, a monomer, a catalyst and a graft initiator.

2. The coated low density polymeric foam of claim 1, where in the low density polymeric foam substrate has a density of up to about 10 lbs/ft.³

3. The coated polymeric foam of claim I, wherein the low density polymeric foam is formed from the group consisting of polyvinyl chloride, acrylo nitrile butadiene rubber, styrene butadione rubber, ethylene-propylene-diene rubber, polychloroprene, polyethylene, polypropylene, co-polymers of ethylene, co-polymers of propylene and combinations thereof.

4. The coated low density polymeric foam of claim 1, further comprising a flexidizing agent.

5. The coated low density polymeric foam of claim 4, wherein the flexidizing agent comprises a latex.

6. The coated low density polymeric foam of claim 1, wherein the graft initiator is selected from the group consisting of ferric ions, silver oxide and silver particles.

7. The coated low density polymeric foam of claim 1, wherein the graft initiator is selected from the group consisting of ferrous ammonium sulfate and silver nitrate.

8. The coated low density polymeric foam of claim 1, further including a redox catalyst.

9. The coated low density polymeric foam of claim 1, wherein the catalyst comprises a peroxide.

10. The coated low density polymeric foam of claim 1, further comprising a UV inhibitor.

11. The coated low density polymeric foam of claim 1, wherein the monomer is a urethane acrylate.

12. The coated low density polymeric foam of claim 1, wherein the coating is water based.

13. The coated low density polymeric foam of claim 1, wherein the prepolymer comprises a urethane.

14. The coated low density polymeric foam of claim 1, wherein the coating has a thickness of between about 10 microns and about 500 microns.

15. A method for manufacturing a coated polymeric low density foam comprising:
providing a polymeric low density foam substrate;
mixing together a prepolymer, a monomer, a catalyst, a graft initiator and water to form a coating; and
applying the coating to the low density foam substrate.

16. The method of claim 15, further including curing the coating on the low density polymeric foam at ambient temperatures.

17. The method of claim 15, further including curing the coating on the low density polymeric foam at elevated temperatures.

18. The method of claim 15, wherein the step of applying the coating is selected from the group consisting of spraying, dipping, rolling and sponging the coating onto the substrate.

19. The method of claim 15, where in the low density polymeric foam substrate has a density of up to about 10 lbs/ft.³

20. The method of claim 15, wherein the low density polymeric foam is formed from the group consisting of polyvinyl chloride, acrylo nitrile butadiene rubber, styrene butadione rubber, ethylene-propylene-diene rubber, polychloroprene, polyethylene, polypropylene, co-polymers of ethylene, co-polymers of propylene and combinations thereof.

21. The method of claim 15, further comprising adding a flexidizing agent to the coating.

22. The method of claim 21, wherein the flexidizing agent comprises a latex.

23. The method of claim 15, wherein the graft initiator is selected from the group consisting of ferric ions, silver oxide and silver particles.

24. The method of claim 15, wherein the graft initiator is selected from the group consisting of ferrous ammonium sulfate and silver nitrate.

25. The method of claim 15, further including adding a redox catalyst to the coating.

26. The method of claim 15, wherein the catalyst comprises a peroxide.

27. The method of claim 15, further including adding a UV inhibitor to the coating.

28. The method of claim 15, wherein the monomer is a urethane acrylate.

29. The method of claim 15, wherein the prepolymer is water dispersible.

30. The method of claim 15, wherein the prepolymer comprises a urethane.

31. A coated polymeric foam comprising:
a polymeric foam substrate having a coating, the coating comprising a water dispersible prepolymer, a monomer, a catalyst and a graft initiator.

32. The coated polymeric foam of claim 31, where in the polymeric foam substrate has a density of up to about 10 lbs/ft.³

33. The coated polymeric foam of claim 31, wherein the polymeric foam is formed from the group consisting of polyvinyl chloride, acrylo nitrile butadiene rubber, styrene butadione rubber, ethylene-propylene-diene rubber, polychloroprene, polyethylene, polypropylene, co-polymers of ethylene, co-polymers of propylene and combinations thereof

34. The coated polymeric foam of claim 31, further comprising a flexidizing agent.

35. The coated polymeric foam of claim 31, wherein the graft initiator is selected from the group consisting of ferrous ammonium sulfate and silver nitrate

36. The coated polymeric foam of claim 31, wherein the catalyst comprises a peroxide.

37. The coated polymeric foam of claim 31, further comprising a UV inhibitor.

38. The coated polymeric foam of claim 31, wherein the monomer is a urethane acrylate.

39. The coated polymeric foam of claim 31, wherein the prepolymer comprises a urethane.

40. A method for manufacturing a coated polymeric foam comprising:
providing a polymeric foam substrate;
mixing together a water dispersible prepolymer, a monomer, a catalyst, a graft initiator and water to form a coating; and
applying the coating to the low density foam substrate.

41. The method of claim 40, further including curing the coating on the polymeric foam at ambient conditions.

42. The method of claim 40, further including curing the coating on the polymeric foam at elevated temperatures.

43. The method of claim 40, wherein the step of applying the coating is selected from the group consisting of spraying, dipping, rolling and sponging the coating onto the substrate.

44. The method of claim 40, wherein the polymeric foam substrate has a density of up to about 10 lbs/ft.³
